# FASCICULE DE BREVET EUROPEEN

(11) **EP 2 096 581 B1**
(45) Date de publication et mention de la délivrance du brevet: **16.03.2011**
(21) Numéro de dépôt: 09152670.7
(22) Date de dépôt: 12.02.2009
(51) Int. Cl.: G06K 19/07, H04L 27/02, G06K 7/00, H04L 27/00

(54) **Etiquette électronique de type RFID**
RFID Type Elektronik Etikett
Electronic Tag of type RFID

(30) Priorité: 28.02.2008 FR 0851285
(43) Date de publication de la demande: 02.09.2009
(73) Titulaire: Schneider Electric Industries SAS, 92500 Rueil-Malmaison (FR)
(72) Inventeur: Emmanuel, Michel, 16380 Chazelles (FR); Bernard, Jacques, 16340 l'Isle d'Espagnac (FR)
(74) Mandataire: Dufresne, Thierry

(56) Documents cités:
- EP-A- 0 687 119
- FR-A- 2 859 846
- US-A1- 2004 072 552
- CHO J-H ET AL: "An analog front-end IP for 13.56MHz RFID interrogators" DESIGN AUTOMATION CONFERENCE, 2005. PROCEEDINGS OF THE ASP-DAC 2005. A SIA AND SOUTH PACIFIC SHANGHAI, CHINA JAN. 18-21, 2005, PISCATAWAY, NJ, USA,IEEE, vol. 2, 18 janvier 2005 (2005-01-18), pages 1208-1211, XP010814589 ISBN: 978-0-7803-8736-2

## Description

La présente invention se rapporte à une étiquette électronique (appelée également transpondeur, tag ou smart label) possédant des moyens de stockage de données et des moyens d'échange de données avec une station de lecture/écriture au moyen d'une technologie RFID (Radio Frequency Identification - Identification par radio fréquence) conforme au protocole ISO 14443B.

Les systèmes d'échange de données par technologie RFID sont déjà largement utilisés dans l'industrie pour reconnaître et/ou identifier à une distance rapprochée et dans un minimum de temps tout type d'objets porteurs d'une telle étiquette en utilisant des ondes radio. La station de lecture/écriture et l'étiquette possèdent une antenne formée par un circuit oscillant dans lequel on peut créer un champ électromagnétique qui permet une communication par couplage magnétique (appelé aussi couplage inductif) avec tout circuit oscillant placé à proximité dans une zone d'action ou zone de dialogue. L'étiquette est ainsi capable de recevoir un signal radio et de renvoyer en réponse un signal différent contenant une information pertinente.

Les étiquettes RFID possèdent un circuit électronique contenant une mémoire qui permet de stocker diverses informations d'identification, de reconnaissance et/ou de process. Certaines étiquettes permettent uniquement une lecture de leurs données stockées lorsqu'une station est placée à proximité mais d'autres permettent en plus une écriture des données (écriture unique ou multiple) stockées sur l'étiquette. Par ailleurs, dans le cas d'une étiquette dite passive, le signal électromagnétique créé par l'antenne de la station de lecture/écriture sert également à alimenter électriquement l'étiquette lorsque celle-ci passe dans la zone d'action, l'étiquette utilisant l'énergie produite par ce champ électromagnétique et ayant alors l'avantage de ne pas nécessiter d'alimentation interne telle qu'une pile. De plus, une étiquette peut aussi être reliée à des équipements divers comme des extensions mémoire, des coupleurs d'entrées/sorties, des capteurs et des actionneurs d'un système d'automatisme, par exemple. Elle permet alors de faire communiquer par liaison radio ces équipements avec une station de lecture/écriture.

Habituellement, le circuit électronique de l'étiquette est souvent réalisé à l'intérieur d'un ASIC, notamment pour réduire fortement l'encombrement de l'étiquette. Cependant, l'utilisation d'un ASIC nécessite des quantités importantes de produits pour pouvoir amortir le coût de conception et de réalisation de cet ASIC. Or, lorsque des quantités importantes ne sont pas envisagées, on souhaiterait néanmoins pouvoir réaliser de façon très simple une étiquette RFID à un moindre coût.

Le document FR2859846 décrit une carte de communication électronique capable de démoduler un signal radiofréquence reçu et de sélectionner un protocole parmi différents protocoles de communication. Les documents EP0687119A1 et US2004072552 décrivent des étiquettes électroniques de type RFID dont le dispositif de couplage est différent de celui de l'invention.

Un des buts de l'invention est donc de proposer un système simple, de faible consommation et économique qui est capable de faire communiquer, par une technologie RFID conforme au protocole ISO 14443B, des équipements divers dotés d'une étiquette avec une ou plusieurs stations de lecture/écriture, sans nécessiter le développement d'un ASIC et en utilisant uniquement des composants discrets.

C'est pourquoi, l'invention propose une étiquette électronique de type RFID telle que définie dans la revendication 1. Des modes de réalisation préférés sont définis dans les revendications dépendantes.

D'autres caractéristiques et avantages vont apparaître dans la description détaillée qui suit en se référant à un mode de réalisation donné à titre d'exemple et représenté par les dessins annexés sur lesquels :

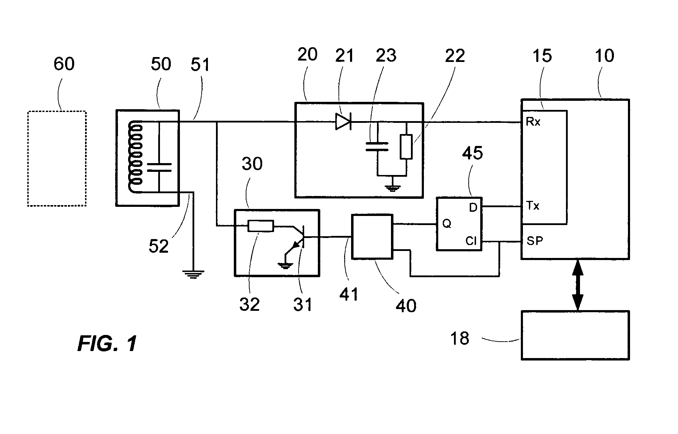

- la figure 1 représente un schéma fonctionnel simplifié d'une étiquette RFID conforme à l'invention.

En référence à la figure 1, une étiquette électronique de type RFID comporte une unité centrale 10, un circuit oscillant 50, une interface de communication 15 de type UART (Universal Asynchronous Receiver Transmitter) et un dispositif de couplage entre le circuit oscillant 50 et l'interface UART 15, permettant de communiquer avec le circuit oscillant 60 d'une station de lecture/écriture selon un protocole radio conforme à la norme ISO 14443B.

Dans l'exemple présenté, l'unité centrale 10 est un microcontrôleur qui comporte sa propre interface UART 15 intégrée dans le microcontrôleur, ce qui permet de simplifier encore la solution. On pourrait aussi envisager d'utiliser une interface UART 15 distincte de l'unité centrale 10 et connectée à celle-ci. L'interface UART 15 reçoit un signal de réception via une entrée Rx et transmet un signal d'émission via une sortie Tx.

Suivant l'application souhaitée, l'unité centrale 10 peut être par ailleurs reliée à divers modules extérieurs tels qu'une extension mémoire 18 ou des entrées/sorties, par exemple via une liaison série. Ainsi, les informations contenues dans la mémoire 18 peuvent être lues et/ou écrites par une station de lecture/écriture grâce à l'étiquette RFID. La mémoire utilisée est préférentiellement de la mémoire RAM ferro qui permet de sauvegarder les données mémorisées sans nécessiter de pile ou batterie, et dont le cycle d'écriture est plus rapide et requiert moins d'énergie que celui d'une mémoire FLASH.

Le circuit oscillant 50 comporte deux bornes 51 et 52 entre lesquelles sont disposées une bobine et une capacité. La borne 52, appelée aussi borne négative, est reliée à la masse de l'étiquette. L'autre borne 51 est appelée aussi borne positive. De façon connue, le circuit oscillant 50 est conçu pour délivrer un signal modulé par une porteuse lorsqu'il est placé à proximité du circuit oscillant 60 d'une station de lecture/écriture. Selon la norme ISO 14443B, ce signal est codé selon la méthode NRZ (Non Return to Zero) qui présente l'avantage d'être facile à utiliser par une interface UART standard, et la fréquence de la porteuse de ce signal est de 13,56 MHz.

Pour la partie réception, le dispositif de couplage de l'étiquette RFID comporte un démodulateur d'amplitude 20 dont l'entrée est reliée à la borne positive 51 du circuit oscillant 50 et dont la sortie est reliée à l'entrée Rx de l'interface UART 15. Un filtre pourrait également être interposé entre le démodulateur 20 et l'entrée Rx de l'interface UART 15. Selon un mode de réalisation préféré, le démodulateur 20 comporte notamment une diode 21 en série entre le circuit oscillant 50 et l'entrée Rx de l'interface UART (l'anode de la diode 21 étant placée par exemple côté circuit oscillant et la cathode côté interface UART), ainsi qu'une capacité 23 et une résistance 22 qui sont reliées en parallèle entre la diode 21 et la masse de l'étiquette, du côté de l'interface UART 15. On voit donc que le démodulateur 20 est de conception très simple et réalisé uniquement avec des composants discrets basiques, grâce à l'utilisation du protocole ISO 14443B et de l'interface UART qui est capable de recevoir directement un signal NRZ démodulé.

Pour la partie émission, le dispositif de couplage comporte d'abord une bascule de synchronisation 45 présentant une première entrée D, appelée entrée de donnée (ou entrée data), une seconde entrée CI, appelée entrée d'horloge, et une sortie Q. L'entrée de donnée D est reliée à la sortie Tx de l'interface UART 15. L'entrée d'horloge CI est reliée à un signal de sous-porteuse SP qui est généré par une sortie de l'unité centrale 10. Le dispositif de couplage comporte ensuite une porte logique 40 réalisant une fonction logique XOR (OU exclusif) entre deux signaux d'entrée. Le premier signal d'entrée de la porte logique 40 est relié à la sortie Q de la bascule 45 et le second signal d'entrée de la porte logique 40 est relié au signal de sous-porteuse SP.

Enfin, la partie émission du dispositif de couplage comporte un modulateur d'amplitude 30 placé entre la sortie 41 de la porte logique 40 et la borne positive 51 du circuit oscillant 50. Selon un mode de réalisation simple, le modulateur 30 comprend notamment un élément de commutation, par exemple un transistor bipolaire 31 et une résistance 32 comme indiqué en figure 1. Dans le cas d'un transistor NPN, la base du transistor 31 est reliée à la sortie 41 de la porte XOR 40 et la résistance 32 est placée entre le collecteur du transistor 31 et la borne positive 51, l'émetteur du transistor 31 étant à la masse de l'étiquette. On voit donc également que le modulateur 30 est de conception très simple et réalisé uniquement avec des composants discrets basiques. L'élément de commutation peut aussi être un transistor MOS, par exemple. Le modulateur 30 peut aussi comporter d'autres composants tels qu'une diode de protection (non représentée sur la figure).

Ainsi, la bascule 45 permet de synchroniser le signal codé NRZ de la sortie Tx de l'interface UART 15 avec le signal de sous-porteuse SP, puis la porte logique 40 permet de le mélanger avec ce signal de sous-porteuse SP. Avantageusement, pour fournir la commande de commutation de modulation, il suffit donc de mélanger le signal codé NRZ de la sortie Tx de l'interface UART avec le signal de sous-porteuse SP, dans le cas du protocole selon la norme ISO 14443B.

La vitesse de communication de l'interface UART, imposée par la norme ISO 14443B, est égale à 106, 212 ou 424 kBauds. Ces vitesses peuvent être très simplement obtenues au sein de l'unité centrale 10 grâce à une division de la fréquence de porteuse égale à 13,56 MHz par un nombre entier N (respectivement N = 128, 64 ou 32). De même, le signal de sous-porteuse SP a une fréquence de 212, 424 ou 848 kHz qui est aussi une division entière de la fréquence de porteuse. Le signal transmis par le circuit oscillant 50 et modulé par la porteuse est donc également envoyé sur une entrée de l'unité centrale 10. Il peut alors être utilisé directement ou indirectement en tant que signal d'horloge de l'unité centrale 10 et permet à l'unité centrale 10 de pouvoir facilement établir par de simples divisions la vitesse de communication et la fréquence de sous-porteuse.

Avantageusement, tout le traitement de sérialisation / désérialisation des trames est à la charge de l'UART, ce qui allège beaucoup la puissance requise pour le microcontrôleur. L'UART peut continuer à fonctionner lorsque le microcontrôleur est en mode veille et ne le réveiller qu'à la fin d'une réception d'un caractère ou d'une trame, par exemple. Dans le cas d'une étiquette passive qui est alimentée électriquement par le signal RFID transmis par le circuit oscillant 50, cette réduction de la consommation requise pour le traitement permet d'améliorer les performances en termes de portée et de vitesse de transmission, performances directement conditionnées par la consommation électrique de l'étiquette.

## Revendications

1. Etiquette électronique de type RFID comprenant un circuit oscillant (50), une unité centrale (10), une interface de communication (15) de type UART et un dispositif de couplage pour communiquer avec une station de lecture/écriture (60) au travers d'un protocole radio conforme au protocole ISO 14443B, tel que le dispositif de couplage comporte :
- un démodulateur (20) comprenant une entrée qui est reliée au circuit oscillant (50) et une sortie qui est reliée à une entrée (Rx) de l'interface UART (15), **caractérisé en ce que** le dispositif comprend en outre:
- une bascule de synchronisation (45) comprenant une première entrée qui est reliée à une sortie (Tx) de l'interface UART, une deuxième (CI) entrée qui est reliée à un signal de sous-porteuse (SP),
- une porte logique (40) réalisant une fonction XOR et comprenant une première entrée qui est reliée à une sortie de la bascule de synchronisation (45), une deuxième entrée qui est reliée au dit signal de sous-porteuse (SP),
- un modulateur (30) comprenant une entrée qui est reliée à la sortie de la porte logique XOR et une sortie qui est reliée au circuit oscillant (50).

2. Etiquette de type RFID selon la revendication 1, **caractérisé en ce que** l'unité centrale (10) fournit un signal de sous-porteuse (SP), dont la fréquence est calculée à partir de la fréquence d'un signal reçu du circuit oscillant (50), le signal de sous-porteuse (SP) étant raccordé à une seconde entrée de la bascule de synchronisation (45) et à une seconde entrée de la porte logique (40).

3. Etiquette de type RFID selon la revendication 1, **caractérisé en ce que** le démodulateur (20) comporte une diode (21) placée en série entre le circuit oscillant (50) et l'entrée de l'interface UART (15), ainsi qu'une capacité (23) et une résistance (22) placées en parallèle entre la diode (21) et la masse de l'étiquette.

4. Etiquette de type RFID selon la revendication 1, **caractérisé en ce que** l'interface UART (15) est intégrée dans l'unité centrale (10) de l'étiquette.

5. Etiquette de type RFID selon la revendication 4, **caractérisé en ce que** l'interface UART (15) est capable de recevoir un signal reçu du circuit oscillant (50), lorsque l'unité centrale (10) de l'étiquette est en mode veille.

6. Etiquette de type RFID selon l'une des revendications précédentes, **caractérisé en ce que** l'unité centrale (10) de l'étiquette est alimentée à partir d'un signal provenant du circuit oscillant (50).

## Claims

1. Electronic tag of the RFID type comprising an oscillating circuit (50), a central unit (10), a communication interface (15) of the UART type, and a coupling device for communicating with a read/write station (60) via a radio protocol conforming with the ISO 14443B protocol such that the coupling device comprises:
- a demodulator (20) comprising an input that is connected to the oscillating circuit (50) and an output that is connected to an input (Rx) of the UART interface (15),
**characterized in that** the device also comprises
- a synchronization flip-flop (45) comprising a first input that is connected to an output (Tx) of the UART interface, a second input (Cl) that is connected to a subcarrier signal (SP),
- a logic gate (40) performing an XOR function and comprising a first input that is connected to an output of the synchronization flip-flop (45) and a second input that is connected to the said subcarrier signal (SP),
- a modulator (30) comprising an input that is connected to the output of the XOR logic gate and an output that is connected to the oscillating circuit (50).

2. A tag of the RFID type according to Claim 1, **characterized in that** the central unit (10) supplies a subcarrier signal (SP), the frequency of which is computed on the basis of the frequency of a signal received from the oscillating circuit (50), the subcarrier signal (SP) being connected to a second input of the synchronization flip-flop (45) and to a second input of the logic gate (40).

3. A tag of the RFID type according to Claim 1, **characterized in that** the demodulator (20) comprises a diode (21) placed in series between the oscillating circuit (50) and the input of the UART interface (15), and a capacitor (23) and a resistor (22) both placed in parallel between the diode (21) and the earth of the tag.

4. Tag of the RFID type according to Claim 1, **characterized in that** the UART interface (15) is incorporated into the central unit (10) of the tag.

5. Tag of the RFID type according to Claim 4, **characterized in that** the UART interface (15) is capable of receiving a signal received from the oscillating circuit (50), when the central unit (10) of the tag is in idle mode.

6. Tag of the RFID type according to one of the preceding claims, **characterized in that** the central unit (10) of the tag is powered from a signal originating from the oscillating circuit (50).

## Patentansprüche

1. Elektronisches Etikett des RFID-Typs, mit einer Oszillationsschaltung (50), einer Zentraleinheit (10), einer Kommunikationsschnittstelle (15) des UART-Typs und einer Kopplungsvorrichtung, um mit einer Lese/Schreib-Station (60) über ein Funkprotokoll gemäß dem ISO-Protokoll 14443B zu kommunizieren, wobei die Kopplungsvorrichtung enthält:
- einem Demodulator (20) mit einem Eingang, der mit der Oszillationsschaltung (50) verbunden ist, und einem Ausgang, der mit einem Eingang (Rx) der UART-Schnittstelle (15) verbunden ist,
**dadurch gekennzeichnet, dass** die Vorrichtung außerdem enthält:
- eine Synchronisationskippschaltung (45) mit einem ersten Eingang, der mit einem Ausgang (Tx) der UART-Schnittstelle verbunden ist, und einem zweiten Eingang (CI), der mit einem Unterträgersignal (SP) verbunden ist,
- ein Logikgatter (40), das eine XOR-Funktion ausführt, mit einem ersten Eingang, der mit einem Ausgang der Synchronisationskippschaltung (45) verbunden ist, und einem zweiten Eingang, der mit dem Unterträgersignal (SP) verbunden ist, und
- einen Modulator (30) mit einem Eingang, der mit dem Ausgang des XOR-Logikgatters verbunden ist, und einem Ausgang, der mit der Oszillationsschaltung (50) verbunden ist.

2. Etikett des RFID-Typs nach Anspruch 1, **dadurch gekennzeichnet, dass** die Zentraleinheit (10) das Unterträgersignal (SP) liefert, dessen Frequenz anhand der Frequenz eines von der Oszillationsschaltung (50) empfangenen Signals berechnet wird, wobei das Unterträgersignal (SP) mit einem zweiten Eingang der Synchronisationskippschaltung (45) und mit einem zweiten Eingang des Logikgatters (40) verbunden ist.

3. Etikett des RFID-Typs nach Anspruch 1, **dadurch gekennzeichnet, dass** der Demodulator (20) eine Diode (21), die zwischen der Oszillationsschaltung (50) und dem Eingang der UART-Schnittstelle (15) in Reihe geschaltet ist, sowie eine Kapazität (23) und einen Widerstand (22), die zwischen der Diode (21) und der Masse des Etiketts parallel geschaltet sind, enthält.

4. Etikett des RFID-Typs nach Anspruch 1, **dadurch gekennzeichnet, dass** die UART-Schnittstelle (15) in die Zentraleinheit (10) des Etiketts integriert ist.

5. Etikett des RFID-Typs nach Anspruch 4, **dadurch gekennzeichnet, dass** die UART-Schnittstelle (15) ein Signal empfangen kann, das von der Oszillationsschaltung (50) empfangen wird, wenn die Zentraleinheit (10) des Etiketts in der Ruhebetriebsart ist.

6. Etikett des RFID-Typs nach einem der vorhergehenden Ansprüche, **dadurch gekennzeichnet, dass** die Zentraleinheit (10) des Etiketts durch ein Signal versorgt wird, das von der Oszillationsschaltung (50) stammt.
